**Europäisches Patentamt**

**European Patent Office**

**Office européen des brevets**

(19)

(11) Veröffentlichungsnummer : **0 025 216**
**B1**

(12)

# EUROPÄISCHE PATENTSCHRIFT

(45) Veröffentlichungstag der Patentschrift :
**01.09.82**

(21) Anmeldenummer : **80105252.3**

(22) Anmeldetag : **03.09.80**

(51) Int. Cl.³ : **H 04 M 19/00, H 04 B 9/00,
H 04 M 1/00**

(54) **Anordnung zur Signalisierung in einem Sprachübertragungssystem mit optisch gespeisten Bauelementen.**

(30) Priorität : **05.09.79 DE 2935838**

(43) Veröffentlichungstag der Anmeldung :
**18.03.81 (Patentblatt 81/11)**

(45) Bekanntmachung des Hinweises auf die Patenterteilung : **01.09.82 Patentblatt 82/35**

(84) Benannte Vertragsstaaten :
**BE CH FR GB IT LI NL SE**

(56) Entgegenhaltungen :
**DE A 2 708 606
DE A 2 924 581
ELEKTRONIK, Heft 26, Dezember 1979,
München, DE, I. FROMM et al. : « Sprachübertragung — rein optisch », Seiten 52-54**

(73) Patentinhaber : **SIEMENS AKTIENGESELLSCHAFT
Berlin und München
Postfach 22 02 61
D-8000 München 22 (DE)**

(72) Erfinder : **Fromm, Ingrid, Dipl.-Phys.
Jawlenskystrasse 10
D-8000 München 71 (DE)**
Erfinder : **Lagger, Helmut, Dipl.-Phys.
Adolf-Baeyer-Damm 26
D-8000 München 83 (DE)**

Anordnung zur Signalisierung in einem Sprachübertragungssystem mit optisch gespeisten Bauelementen

Die vorliegende Erfindung betrifft eine Anordnung zur Signalisierung in einem Sprachübertragungssystem mit optisch gespeisten Bauelementen, bei dem die Lichtleitfasern außer zur Übertragung der Kommunikationssignale auch zur Übertragung der zum Verbindungsaufbau und -abbau erforderlichen Signale sowie zur Übertragung von Energie in Form von Licht zur Energieversorgung der Teilnehmerstation dienen.

In den letzten Jahren sind aus Glasfasern bestehende Lichtwellenleiter entwickelt worden, die es gestatten, breitbandige Signale mit vergleichsweise niedriger Dämpfung zu übertragen. Diese Eigenschaften machen Lichtwellenleiter besonders geeignet zur Verwendung in höheren Netzebenen von Fernsprechsystemen, in denen gleichzeitig eine größere Anzahl von Fernsprechsignalen in Zeitmultiplex- oder Frequenzmultiplextechnik übertragen werden. Werden die Übertragungsleitungen in höheren Netzebenen aus Lichtwellenleitern aufgebaut, so gewinnt aber auch schon aus Gründen der Anwendung einer einheitlichen Übertragungstechnik die Verwendung von Lichtwellenleitern in den unteren Netzebenen bis zu den einzelnen Teilnehmerstationen an Interesse. Dies gilt besonders dann, wenn auch für die Teilnehmerleitungen ein Bedürfnis nach höherer Frequenzbandbreite besteht, als die üblichen elektrischen Fernsprechteilnehmerleitungen zur Verfügung stellen können.

Aus der deutschen Offenlegungsschrift 27 08 606 ist ein Kommunikationssystem bekannt, bei dem teilnehmerseitig ein optischer Gabelschalter und ein weiterer optischer Wechselschalter vorgesehen sind, mit deren Hilfe durch unterschiedliche Betätigungen der Schalter mehrere Betriebszustände der Teilnehmerstation, nämlich der Bereitschaftszustand zum Empfang eines ankommenden Rufes, der Gesprächszustand, in dem sowohl ankommende Kommunikationssignale einem optoakustischen Wandler als auch abgehende Kommunikationssignale einem akustooptischen Wandler zugeführt werden, und der Signalisierungszustand, in dem vom Teilnehmer eingegebene Wählinformation in entsprechende optische Signale umgesetzt und zur Vermittlungsstelle übertragen werden, einstellbar sind. In der Teilnehmerstation für das bekannte Kommunikationssystem sind außer den genannten optischen Umschaltern eine optische Gabel, ein optischer Kopplungspunkt und eine optische Frequenzweiche zur Erfüllung der genannten Funktionen erforderlich.

Der vorliegenden Erfindung liegt die Aufgabe zugrunde, eine Anordnung zur Signalisierung in einem Sprachübertragungssystem mit optisch gespeisten Bauelementen, bei dem die Lichtleitfasern außer zur Übertragung der Kommunikationssignale auch zur Übertragung der zum Verbindungsaufbau erforderlichen Signale sowie zur Übertragung von Energie in Form von Lichtenergie zur Versorgung der Teilnehmerstation dienen, zu schaffen, bei der der steuerungstechnische Aufwand gegenüber dem bekannten Kommunikationssystem auf der Seite der Teilnehmerstation verringert ist und bei dem zur Umsteuerung der optischen Wege innerhalb der Station erforderliche optische Umschalter vorgesehen sind, die vollkommen gleichartig betätigt werden, so daß eine einfache, der Funktion herkömmlicher Fernsprechstation angepaßte Funktion solcher Schalter ermöglicht ist.

Die gennannte Aufgabe wird durch eine Anordnung zur Signalisierung in einem Sprachübertragungssystem mit optisch gespeisten Bauelementen, bei dem die Lichtleitfasern außer zur Übertragung der Kommunikationssignale auch zur Übertragung der zum Verbindungsaufbau und -abbau erforderlichen Signale sowie zur Übertragung von Energie in Form von Licht zur Energieversorgung der Teilnehmerstation dienen, gelöst, bei der die Energie zur Versorgung der Teilnehmerstation in Form unmodulierten Lichts übertragen wird, bei der die Frequenz des übertragenen unmodulierten Lichts von der Grundfrequenz des von der Vermittlungsstelle zur Teilnehmerstation übertragenen Lichtsignals abweicht und bei der in der Teilnehmerstation für das aus der Vermittlungsstelle ankommende Licht eine Frequenzweiche angeordnet ist, die das ankommende modulierte Licht über einen optischen Umschalter und einen optoelektrischen Wandler an einen Lautsprecher und das unmodulierte Licht an einen akustooptischen Modulator leitet.

Die erfindungsgemäße Anordnung ist dadurch gekennzeichnet, daß in der Vermittlungsstelle Mittel vorgesehen sind, mittels derer alle an die Vermittlungsstelle angeschlossenen Teilnehmerstationen periodisch mit kurzen Lichtimpulsen auf ihren Betriebszustand hin abgefragt werden, daß in der Teilnehmerstation ein erster optischer Umschalter und ein zweiter optischer Umschalter vorgesehen sind, die mittelbar durch den Teilnehmersynchron betätigbar sind, daß die kurzen Lichtimpulse im Ruhezustand der Teilnehmerstation durch einen optoelektrischen Wandler absorbiert und im für einen abgehenden Ruf aktivierten Zustand durch einen akustooptischen Modulator zumindest teilweise reflektiert werden, daß im Falle einer ankommenden Verbindung zur Aktivierung eines Ruforgans Dauerlicht oder im Rufrhythmus gepulstes Dauerlicht beider Frequenzen zur Teilnehmerstation gesendet wird und daß die kurzen Lichtimpulse zur Abfrage des Betriebszustandes in ihrer Impulslänge und in ihrem Impuls-/Pausenverhältnis so bemessen sind, daß einerseits das Ruforgan nicht aktiviert wird und andererseits keine merkliche Verzögerung des abgehenden Verbindungsaufbaues zustandekommt.

Die Erfindung bietet den Vorteil, daß die Funktionsabläufe in der Teilnehmerstation denen in einer herkömmlichen, ausschließlich elektrisch versorgten Teilnehmerstation entsprechen und damit keine abweichenden Bedienungshandgriffe erforderlich sind. Darüber hinaus ist es vorteilhaft, daß zur Abfrage der an eine Vermittlungsstelle angeschlossenen Teilnehmerstationen lediglich diesen in einem Zeitraster individuell zugeteilte kurze Lichtimpulse von zentraler Stelle ausgesendet werden müssen, so daß eine Vielzahl von Teilnehmerstationen von einer einzigen Lichtquelle her abfragbar sind.

Eine Weiterbildung der Erfindung sieht vor, daß von der Vermittlungsstelle über einen Lichtwellenleiter zur Abfrage eines Verbindungswunsches periodisch kurze Lichtimpulse eines unmodulierten Lichtes erster Frequenz aus einer ersten Lichtquelle über eine teilnehmerseitige Frequenzweiche und einen ersten optischen Umschalter leitbar sind, daß die kurzen Lichtimpulse im Ruhezustand, nämlich im eingehängten Zustand, der Teilnehmerstation über die Umschalterruhestellung auf einen ersten teilnehmerseitigen optoelektrischen Wandler gelangen, wo sie absorbiert werden, oder im Arbeitszustand, nämlich im ausgehängten Zustand, über die Umschalterarbeitsstellung und eine teilnehmerseitige optische Gabel auf einen akustooptischen Modulator gelangen, von dem sie reflektiert werden, daß diese reflektierten kurzen Lichtimpulse über die vermittlungsstellenseitige Frequenzweiche und die vermittlungsstellenseitige optische Gabel einem vermittlungsstellenseitigen optoelektrischen Wandler zuführbar sind, der entsprechende elektrische Impulse über eine zweite Koppelleitung an eine betreffende Auswerteeinrichtung innerhalb der Vermittlungsstelle abgibt, daß im Rufzustand ständig unmoduliertes Licht der ersten Frequenz und ständig unmoduliertes Licht einer zweiten Frequenz aus einer zweiten Lichtquelle über eine teilnehmerseitige Frequenzweiche und einen ersten optischen Umschalter teilnehmerseitige Frequenzweiche, den ersten optischen Umschalter und einen zweiten optischen Umschalter über deren jeweilige Umschalterruhestellung auf den ersten teilnehmerseitigen optoelektrischen Wandler geleitet werden, daß an den ersten teilnehmerseitigen optoelektrischen Wandler ein Tonfrequenzgenerator mit einem Schallgeber angeschlossen ist, daß der Tonfrequenzgenerator und der Schallgeber auf Grund der zugeführten Lichtleistung aktiviert werden und daß beim Abheben des Handapparates der erste optische Umschalter und der zweite optische Umschalter in ihre jeweilige Umschalterarbeitsstellung gelegt werden, so daß das unmodulierte Licht erster Frequenz mittels des akustooptischen Modulators in moduliertes Licht erster Frequenz gewandelt werden kann und moduliertes Licht einer zweiten Frequenz mittels eines zweiten teilnehmerseitigen optoelektrischen Wandlers in elektrische Signale umgesetzt werden kann, so daß ein Lautsprecher, der an den zweiten teilnehmerseitigen optoelektrischen Wandler angeschlossen ist, den zugeführten optischen Kommunikationssignalen entsprechende akustische Signale erzeugt.

Die Weiterbildung der Erfindung bietet den Vorteil, daß sowohl in den Teilnehmerstationen als auch in der betreffenden Vermittlungsstelle jeweils ein relativ geringer Bauelemente-Aufwand erforderlich ist.

Andere Weiterbildungen der Erfindung sind durch die in den betreffenden Unteransprüchen angegebenen Merkmale gekennzeichnet.

Im folgenden wird die Erfindung an Hand einer, ein Ausführungsbeispiel für die Erfindung betreffenden Figur erläutert.

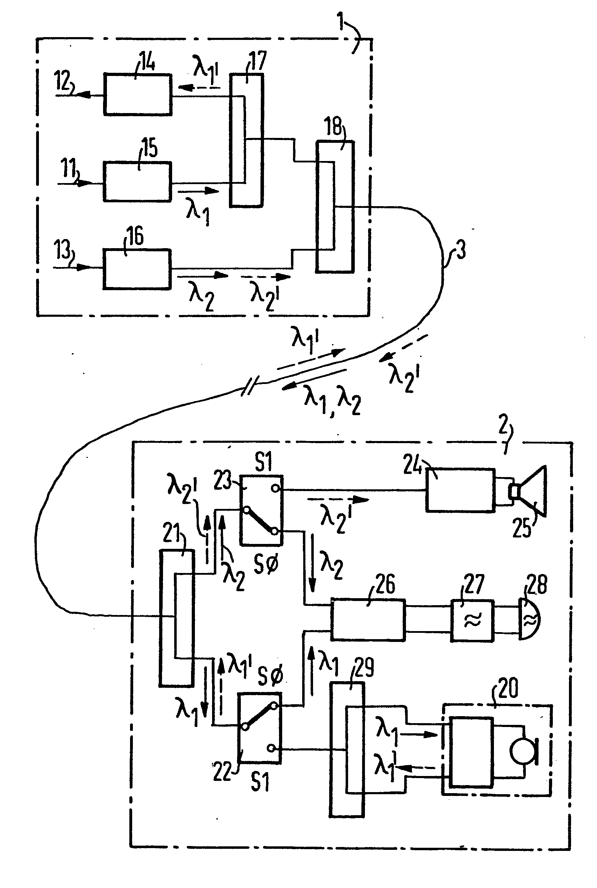

Die Figur zeigt im oberen Teil die für die Erfindung wesentlichen Teile innerhalb einer Vermittlungsstelle 1, nämlich eine erste Koppelleitung 11, eine zweite Koppelleitung 12, eine dritte Koppelleitung 13, einen vermittlungsstellenseitigen optoelektrischen Wandler 14, eine erste Lichtquelle 15, eine zweite Lichtquelle 16, eine vermittlungsstellenseitige optische Gabel 17 und eine vermittlungsstellenseitige Frequenzweite 18.

In ihrem unteren Teil zeigt die Figur ein Ausführungsbeispiel für die erfindungsgemäße Teilnehmerstation 2 mit allen für die Erfindung wesentlichen Teilen, nämlich einer teilnehmerseitigen Frequenzweiche 21, einem ersten optischen Umschalter 22, einem zweiten optischen Umschalter 23, einem ersten teilnehmerseitigen optoelektrischen Wandler 26, einem zweiten teilnehmerseitigen optoelektrischen Wandler 24, einem Lautsprecher 25, einem Tonfrequenzgenerator 27, einem Schallgeber 28, einer teilnehmerseitigen optischen Gabel 29 und einem akustooptischen Modulator 20. Die Vermittlungsstelle 1 und die Teilnehmerstation 2 sind über einen Lichtwellenleiter 3 miteinander verbunden.

In dem gezeigten Ausführungsbeispiel für die Erfindung sind der erste optische Umschalter 22 und der zweite optische Umschalter 23 als an sich bekannte monostabile, magnetisch betätigbare Faserschalter nach dem Reed-Relaisprinzip realisiert, vgl. z.B. Siemens Forschungs- und Entwicklungsberichte, Band 8, (1979), Nr. 3, Springer-Verlag 1979 : « Reed-Type Routing Switch for Multimode Optical Fibers » von G. Winzer, E. Grassl, M. Stockmann und R. Fiereder. Die optischen Gabeln 17 und 29 sowie die Frequenzzweichen 18 und 21 sind ebenfalls an sich bekannt, vgl. z.B. Siemens Forschungs- und Entwicklungsberichte, Band 8 (1979), Nr. 1, Springer-Verlag 1979 : « Tapping Elements with Thin Film Beam Splitters Directly Applied to Optical Fiber Endfaces » von G. Winzer und Siemens Forschungs- und Entwicklungsbereiche, Band 8 (1979) Nr. 3 (1979), Springer-Verlag 1979 : « Microoptic Passive Devices for Multimode Optical Fiber-Communication Systems » von D. Rosenberger. Im Ruhezustand der Teilnehmerstation, d.h. bei aufgelegtem bzw. eingehängtem Handapparat befinden sich die optischen Umschalter 22, 23 in ihrer jeweiligen Umschalterruhestellung $s_0$. Jedem der Teilnehmer sind in der Vermittlungsstelle 1 eine erste Lichtquelle 15 und eine zweite Lichtquelle 16 fest oder zuteilbar zugeordnet. Diese Lichtquellen senden im Ruhezustand der Teilnehmerstation 2 ein unmoduliertes Licht erster Frequenz $\lambda_1$ bzw. ein unmoduliertes Licht zweiter Frequenz $\lambda_2$ über die vermittlungsstellenseitige Frequenzweiche 18, den Lichtwellenleiter 3, die teilnehmerseitige Frequenzweiche 21 und die jeweiligen Umschalterruhestellungen $s_0$ des ersten optischen Umschalters 22 und des zweiten optischen Umschalters 23 zu dem ersten teilnehmerseitigen optoelektrischen Wandler 26. Die so zugeführte Lichtleistung wird in dem genannten optoelektrischen Wandler in bekannter Weise, nämlich mittels eines Fotoelements in elektrische Leistung gewandelt. Dem ersten teilnehmerseitigen optischen Wandler 26 ist ein Tonfrequenzgenerator 27, der vorzugsweise als verlustarmer Multivibrator realisiert ist, nachgeschaltet. An den Tonfrequenzgenerator 27 ist ein Schallgeber 28 angeschlossen, der vorzugsweise als piezokeramische Platte ausgebildet ist, die durch die von dem Multivibrator abgegebenen elektrischen Signale zum Schwingen angeregt wird. Dadurch entsteht ein akustisches Signal, das mit Hilfe eines an sich bekannten Resonanzkörpers zu einem Rufton verstärkt wird. Da beide Lichtquellen für das Erzeugen dieses Ruftons ausgenutzt werden, steht vorteilhafterweise eine relativ große Lichtleistung und damit mittelbar eine relativ große Lautstärke zur Verfügung.

Das Abheben bzw. Aushängen des Handapparates bewirkt, daß die beiden optischen Umschalter 22, 23 in ihre jeweilige Umschalterarbeitsstellung $s_1$ gebracht werden. Zu diesem Zweck ist gemäß einem Ausführungsbeispiel für die Erfindung für die Teilnehmerstation 2 ein den als Sprechkapsel fungierenden akustooptischen Wandler 20 und den als Hörkapsel fungierenden Lautsprecher 25 enthaltender Handapparat vorgesehen, in dessen Griff-bzw. Auflagebereich ein Permanentmagnet geeigneter Feldstärke derart angeordnet ist, daß der erste optische Umschalter 22 und der zweite optische Umschalter 23 jeweils bei eingehängtem bzw. aufgelegtem Handapparat in die Umschalterruhestellung $s_0$ oder bei abgehobenem bzw. ausgehängtem Handapparat in die Umschalterarbeitsstellung $s_1$ zu bringen sind. Ein anderes Ausführungsbeispiel für die Erfindung sieht vor, daß der erste optische Umschalter 22 und der zweite optische Umschalter 23 als bistabile, elektromagnetisch betätigbare Faserschalter realisiert sind, daß zum Betätigen des ersten optischen Umschalters 22 und des zweiten optischen Umschalters 23 elektrische Energie in Form einer Kondensatorladung aus dem optoelektrischen Wandler 26 entnehmbar ist und daß die Kondensatorladung beim Aushängen bzw. Abheben oder Einhängen bzw. Auflegen des Handapparates mittelbar oder unmittelbar über einen an sich bekannten Gabelschalterkontakt in die jeweilige Betätigungsspule des ersten optischen Umschalters 22 und des zweiten optischen Umschalters 23 fließt, so daß der erste optische Umschalter 22 und der zweite optische Umschalter 23 jeweils bei eingehängtem bzw. aufgelegtem Handapparat in die Umschalterruhestellung $s_0$ oder bei abgehobenem bzw. ausgehängtem Handapparat in die Umschalterarbeitsstellung $s_1$ zu bringen sind.

Durch das Betätigen der beiden optischen Umschalter 22, 23 wird die optische Verbindung der beiden Lichtquellen 15, 16 mit dem ersten teilnehmerseitigen optoelektrischen Wandler 26 unterbrochen. Gleichzeitig werden über die jeweiligen Umschalterarbeitsstellungen $s_1$ der beiden optischen Umschalter 22, 23 der als Sprechkapsel fungierende akustooptische Modulator 20 und der als Hörkapsel fungierende Lautsprecher 25, der seinerseits an einen zweiten teilnehmerseitigen optoelektrischen Wandler 24 angeschlossen ist, mit den beiden Lichtquellen verbunden. Der akustooptische Modulator 20 moduliert in an sich bekannter Weise das eintreffende unmodulierte Licht erster Frequenz $\lambda_1$ und gibt es als moduliertes Licht erster Frequenz $\lambda_1'$ und gibt es als moduliertes Licht erster Frequenz $\lambda_1'$ wieder ab. Eine teilnehmerseitige optische Gabel 29 ist dafür vorgesehen daß das unmodulierte Licht erster Frequenz $\lambda_1'$ in den Eingang des akustooptischen. Modulators 20 gelangt und das modulierte Licht erster Frequenz $\lambda_1'$ vom Ausgang des akustooptischen Modulators 20 zurück zur Vermittlungsstelle 1 gelangt. Von der Vermittlungsstelle her wird nun das licht der zweiten Lichtquelle 16 als moduliertes Licht zweiter Frequenz $\lambda_2'$ zur Teilnehmerstation gesendet, in der es über die Umschalterarbeitsstellung $s_1$ des zweiten optischen Umschalters 23 zu dem zweiten teilnehmerseitigen optoelektrischen Wandler 24 gelangt, der die optischen Signale in an sich bekannter Weise, nämlich mittels eines Fotoelements, in entsprechende elektrische Signale für den Lautsprecher 25 wandelt.

Es ist vorgesehen, daß die beiden Lichtquellen 15, 16 kohärentes Licht mittels einer jeweils dafür vorgesehenen Laserdiode LD abgeben. Ein anderes Ausführungsbeispiel sieht vor, daß die beiden Lichtquellen 15, 16 inkohärentes Licht mittels lichtemittierender Dioden LED abgeben.

Zum Aufbau abgehender Verbindungen sind in der Teilnehmerstation 2 erfindungsgemäß Mittel vorgesehen, mittels derer Wählinformationen dadurch abgebbar sind, daß das modulierte Licht erster Frequenz $\lambda_1'$ in den herkömmlichen elektrischen Wählimpulsen entsprechenden Lichtimpulsen reflektiert werden. Vorzugsweise wird hierfür der Lichtfluß des unmoduliertes Lichtes erster Frequenz $\lambda_1$ durch eine mit einer sog. Wählscheibe mechanisch verbundenen Lochscheibe entsprechend den abzugebenden Lichtimpulsen unterbrochen. In der Vermittlungsstelle 1 ist eine vermittlungsstellenseitige optische Gabel 17 vorgesehen, mittels derer unmoduliertes Licht erster Frequenz $\lambda_1$ aus der ersten Lichtquelle 15 in Richtung der Teilnehmerstation 2 und moduliertes Licht erster Frequenz $\lambda_1'$ von der

Teilnehmerstation kommend zu einem vermittlungsstellenseitigen optoelektrischen Wandler 14, der vorzugsweise als Fotodiode realisiert ist, geleitet wird. Dieser vermittlungsstellenseitige optoelektrische Wandler 14 ist über eine zweite Koppelleitung 12 mit nachgeordneten vermittlungstechnischen Einrichtungen innerhalb der Vermittlungsstelle 1 verbunden. Ebenso sind die erste Lichtquelle 15 und die zweite Lichtquelle 16 über ihnen zugehörige Kopplungsleitungen 11 bzw. 13 mit weiteren, nicht gezeigten vermittlungstechnischen Einrichtungen innerhalb der Vermittlungsstelle 1 verbunden.

**Ansprüche**

1. Anordnung zur Signalisierung in einem Sprachübertragungssystem mit optisch gespeisten Bauelementen, bei dem die Lichtleitfasern (3) außer zur Übertragung der Kommunikationssignale auch zur Übertragung der zum Verbindungsaufbau und -abbau erforderlichen Signale sowie zur Übertragung von Energie in Form von Licht zur Energieversorgung der Teilnehmerstation (2) dienen, bei der die Energie zur Versorgung der Teilnehmerstation (2) in Form unmodulierten Lichts übertragen wird, bei der die Frequenz des übertragenen unmodulierten Lichts ($\lambda_1$) von der Grundfrequenz des von der Vermittlungsstelle (1) zur Teilnehmerstation (2) übertragenen Lichtsignals ($\lambda_2$) abweicht und bei der in der Teilnehmerstation (2) für das aus der Vermittlungsstelle (1) ankommende Licht ($\lambda_1$, $\lambda_2$, $\lambda_2'$) eine Frequenzweiche (21) angeordnet ist, die das ankommende modulierte Licht ($\lambda_2'$) über einen optischen Umschalter (23) und einen optoelektrischen Wandler (24) an einen Lautsprecher (25) und das unmodulierte Licht ($\lambda_1$) an einen akustooptischen Modulator (20) leitet, dadurch gekennzeichnet, daß in der Vermittlungsstelle (1) Mittel vorgesehen sind, mittels derer alle an die Vermittlungsstelle (1) angeschlossenen Teilnehmerstationen (2) periodisch mit kurzen Lichtimpulsen auf ihren Betriebszustand hin abgefragt werden, daß in der Teilnehmerstation (2) ein erster optischer Umschalter (22) und ein zweiter optischer Umschalter (23) vorgesehen sind, die mittelbar durch den Teilnehmer synchron betätigbar sind, daß die kurzen Lichtimpulse ($\lambda_1$, $\lambda_2$) im Ruhezustand der Teilnehmerstation (2) durch einen optoelektrischen Wandler (26) absorbiert und im für einen abgehenden Ruf aktivierten Zustand durch einen akustooptischen Modulator (20) zumindest teilweise reflektiert werden, daß im Falle einer ankommenden Verbindung zur Aktivierung eines Ruforgans Dauerlicht oder im Rufrhythmus gepulstes Dauerlicht beider Frequenzen ($\lambda_1$, $\lambda_2$) zur Teilnehmerstation (2) gesendet wird und daß die kurzen Lichtimpulse zur Abfrage des Betriebszustandes in ihrer Impulslänge und in ihrem Impuls-/Pausenverhältnis so bemessen sind, daß einerseits das Ruforgan nicht aktiviert wird und andererseits keine merkliche Verzögerung des abgehenden Verbindungsaufbaues zustandekommt.

2. Anordnung zur Signalisierung nach Anspruch 1, dadurch gekennzeichnet, daß von der Vermittlungsstelle (1) über einen Lichtwellenleiter (3) zur Abfrage eines Verbindungswunsches periodisch kurze Lichtimpulse eines unmodulierten Lichtes erster Frequenz ($\lambda_1$) aus einer ersten Lichtquelle (15) über eine teilnehmerseitige Frequenzweiche (21) und einen ersten optischen Umschalter (22) leitbar sind, daß die kurzen Lichtimpulse im Ruhezustand, nämlich im eingehängten Zustand, der Teilnehmerstation (2) über die Umschalterruhestellung ($s_0$) auf einen ersten teilnehmerseitigen optoelektrischen Wandler (26) gelangen, wo sie absorbiert werden, oder im Arbeitszustand, nämlich im ausgehängten Zustand, über die Umschalterarbeitsstellung ($s_1$) und eine teilnehmerseitige optische Gabel (29) auf einen akustooptischen Modulator (20) gelangen, von dem sie reflektiert werden, daß diese reflektierten kurzen Lichtimpulse über die vermittlungsstellenseitige Frequenzweiche (18) und die vermittlungsstellenseitige optische Gabel (17) einem vermittlungsstellenseitigen optoelektrischen Wandler (14) zuführbar sind, der entsprechend elektrische Impulse über eine zweite Koppelleitung (12) an eine betreffende Auswerteeinrichtung innerhalb der Vermittlungsstelle (1) abgibt, daß im Rufzustand ständig unmoduliertes Licht der ersten Frequenz ($\lambda_1$) und ständig unmoduliertes Licht einer zweiten Frequenz ($\lambda_2$) aus einer zweiten Lichtquelle (16) über die vermittlungsstellenseitige Frequenzweiche (18), den Lichtwellenleiter (3), die teilnehmerseitige Frequenzweiche (21), den ersten optischen Umschalter (22) und einen zweiten optischen Umschalter (23) über deren jeweilige Umschalterruhestellung ($s_0$) auf den ersten teilnehmerseitigen optoelektrischen Wandler (26) geleitet werden, daß an den ersten teilnehmerseitigen optoelektrischen Wandler (26) ein Tonfrequenzgenerator (27) mit einem Schallgeber (28) angeschlossen ist, daß der Tonfrequenzgenerator (27) und der Schallgeber (28) auf Grund der zugeführten Lichtleistung aktiviert werden und daß beim Abheben des Handapparates der erste optische Umschalter (22) und der zweite optische Umschalter (23) in ihre jeweilige Umschalterarbeitsstellung ($s_1$) gelegt werden, so daß das unmodulierte Licht erster Frequenz ($\lambda_1$) mittels des akustooptischen Modulators (20) in moduliertes Licht erster Frequenz ($\lambda_1'$) gewandelt werden kann und moduliertes Licht einer zweiten Frequenz ($\lambda_2'$) mittels eines zweiten teilnehmerseitigen optoelektrischen Wandlers (24) in elektrische Signale umgesetzt werden kann, so daß ein Lautsprecher (25), der an den zweiten teilnehmerseitigen optoelektrischen Wandler (24) angeschlossen ist, den zugeführten optischen Kommunikationssignalen entsprechende akustische Signale erzeugt.

3. Anordnung zur Signalisierung nach Anspruch 1 oder 2, dadurch gekennzeichnet, daß der erste optische Umschalter (22) und der zweite optische Umschalter (23) als an sich bekannte monostabile, magnetisch betätigbare Faserschalter realisiert sind und daß für die Teilnehmerstation (2) ein den als Sprechkapsel fungierenden akustooptischen Wandler (20) und den als Hörkapsel fungierenden Lautsprecher (25) enthaltender Handapparat vorgesehen ist, in dessen Griff- bzw. Auflagebereich ein Permanentmagnet geeigneter Feldstärke derart angeordnet ist, daß der erste optische Umschalter (22) und der zweite optische Umschalter (23) jeweils bei eingehängtem bzw. aufgelegtem Handapparat in die Umschalterruhestellung ($s_0$) oder bei abgehobenem bzw. ausgehängtem Handapparat in die Umschalterarbeitsstellung ($s_1$) zu bringen sind.

4. Anordnung zur Signalisierung nach Anspruch 1 oder 2, dadurch gekennzeichnet, daß der erste optische Umschalter (22) und der zweite optische Umschalter (23) als bistabile, elektromagnetisch betätigbare Faserschalter realisiert sind, daß zum Betätigen des ersten optischen Umschalters (22) und des zweiten optischen Umschalters (23) elektrische Energie in Form einer Kondensatorladung aus dem optoelektrischen Wandler (26) entnehmbar ist und daß die Kondensatorladung beim Aushängen bzw. Abheben oder Einhängen bzw. Auflegen des Handapparates mittelbar oder unmittelbar über einen an sich bekannten Gabelschalterkontakt in die jeweilige Betätigungsspule des ersten optischen Umschalters (22) und des zweiten optischen Umschalters (23) fließt, so daß der erste optische Umschalter (22) und der zweite optische Umschalter (23) jeweils bei eingehängtem bzw. aufgelegtem Handapparat in die Umschalterruhestellung ($s_0$) oder bei abgehobenem bzw. ausgehängtem Handapparat in die Umschalterarbeitsstellung ($s_1$) zu bringen sind.

5. Anordnung zur Signalisierung nach Anspruch 1 oder 2, dadurch gekennzeichnet, daß in der Teilnehmerstation (2) Mittel vorgesehen sind, mittels derer für aufzubauende abgehende Verbindungen Wählinformationen dadurch abgegeben werden, daß das modulierte Licht erster Frequenz ($\lambda_1'$) in den herkömmlichen elektrischen Wählimpulsen entsprechenden Lichtimpulsen reflektiert werden.

6. Anordnung zur Signalisierung nach Anspruch 2, dadurch gekennzeichnet, daß die erste Lichtquelle (15) und die zweite Lichtquelle (16) kohärentes Licht abgeben.

7. Anordnung zur Signalisierung nach Anspruch 2, dadurch gekennzeichnet, daß die erste Lichtquelle (15) und die zweite Lichtquelle (16) inkohärentes Licht abgeben.

## Claims

1. A speech transmission system signalling arrangement comprising optically fed components, wherein in addition to the transmission of the communications signals the light conducting fibres (3) serve both for the transmission of the signals wich are required for setting-up and clearing connections and for the transmission of energy in the form of light for the energy supply of the subscriber station (2), the energy for the supply of the subscriber station (2) being transmitted in the form of unmodulated light, the frequency of the transmitted unmodulated light ($\lambda_1$) differing from the fundamental frequency of the light signal ($\lambda_2$) transmitted from the exchange (1) to the subscriber station (2), and the subscriber station (2) being provided with a frequency filter (21) for the light ($\lambda_1, \lambda_2, \lambda_2'$) received from the exchange (1), which frequency filter passes the incoming modulated light ($\lambda_2'$) via an optical change-over switch (23) and an opto-electrical transducer (24) to a loudspeaker (25) and passes the unmodulated light ($\lambda_1$) to an acousto-optical modulator (20), characterised in that in the exchange (1), there are arranged means with the aid of which all subscriber stations (2) which are connected to the exchange (1) are periodically interrogated at to their operating state by means of short light pulses, and that in the subscriber station (2) there are arranged a first optical change-over switch (22) and a second optical change-over switch (23) which can be directly synchronously operated by the subscriber, and that the short light pulses ($\lambda_1, \lambda_2$) are absorbed by an opto-electrical transducer (26) when the subscriber station (2) is in the rest state and at least partly reflected by means of an acousto-optical modulator (20) when in the state which is activated for an outgoing call, and that in the case of an incoming connection, in order to activate a calling element, continuous constant light of both frequencies ($\lambda_1, \lambda_2$) or such constant light pulsed in the calling rhythm is transmitted to the subscriber station (2), and that in order to interrogate the operating state, the short light pulses have a pulse length such that their mark/space ratio does not activate the calling element and that no noticeable delay of the outgoing connection establishment occurs.

2. A signalling arrangement as claimed in claim 1, characterised in that periodically short light pulses of an unmodulated light of a first frequency ($\lambda_1$) can be conducted from the exchange (1), by means of a light wave guide (3) from a first light source (15) via a frequency filter (21) at the subscriber end and a first optical change-over switch (22) in order to interrogate a connection request, and that in the rest state, namely when the subscriber station (2) is not in use, the short light pulses are fed via the rest position ($s_0$) of the change-over switch to a first opto-electrical transducer (26) at the subscriber end, where they are absorbed, or in the operating state, namely when the subscriber station is in use, the short light pulses are fed via the operating state ($s_1$) of the change-over switch and an optical branching unit (29) to an acousto-optical modulator (20) from which it is reflected, and that these reflected short light pulses can be fed to an optoelectrical transducer (14) at the exchange end via the frequency filter (8) at the exchange end and via the optical branching unit (27) at the exchange end, which opto-electrical transducer

corresponding ly emits electric pulses to a respective analysis device inside the exchange (1) by means of a second switching line (12), and that in the calling state, continuous unmodulated light of the first frequency ($\lambda_1$) and continuous unmodulated light of a second frequency ($\lambda_2$) are transmitted from a second light source (16) to the first opto-electrical transducer (26) at the subscriber end via the frequency filter (18) at the exchange end, the light wave guide (3), the frequency filter (21) at the subscriber end, the first optical change-over switch (22) and a second optical change-over switch (23) by means of their respective rest position ($s_0$), and that an audiofrequency generator (27) comprising a sound transmitter (28) is connected to the opto-electrical transducer (26) at the subscriber end, and that the audiofrequency generator (27) and the sound generator (28) are activated due to the supplied light efficiency, and that when lifting the handset the first optical change-over switch (22) and the second optical changeover switch (23) are placed into their respective operating state ($s_1$), so that the unmodulated light of the first frequency ($\lambda_1$) can be changed into modulated light of the first frequency ($\lambda_1'$) by means of the acousto-optical modulator (20) and modulated light of a second frequency ($\lambda_2'$) can be converted into electrical signals by means of a second optoelectrical transducer (24) at the subscriber end, so that a loudspeaker (25) which is connected to the second opto-electrical transducer (24) at the subscriber end produces acoustic signals which correspond to the supplied optical communications signals.

3. A signalling arrangement as claimed in claim 1, or 2, characterised in that the first optical change-over switch (22) and the second optical change-over switch (23) are constructed as monostable, magneticallyoperable fibre switches which are known per se, and that a handset containing the acousto-optical transducer (20) which acts as mouthpiece and containing the loudspeaker (25) which acts as earpiece is provided for the subscriber station (2), in the region of the handle or support of which handset, there is arranged a permanent magnet of a suitable filed strength in such manner that the first optical change-over switch (22) and the second optical change-over switch (23) are respectively to be brought into the rest position ($s_0$) of the change-over switch when the handset is not in use or replaced or into the operating position ($s_1$) of the change-over switch when the handset is in use or lifted.

4. A signalling arrangement as claimed in claim 1 or 2, characterised in that the first optical change-over switch (22) and the second optical change-over switch (23) are constructed as bistable, electromagnetically fibre switches, and that in order to operate the first optical change-over switch (22) and the second optical change-over switch (23) electric energy can be drawn from the opto-electric transducer (26) in the form of a capacitor charge, and that the capacitor charge indirectly or directly flows into the respective operating coil of the first optical change-over switch (22) and the second optical change-over switch (23) by means of a hybrid switch contact, which is known per se, when the handset is in use or lifted or not in use or replaced, so that the first optical change-over switch (22) and the second optical change-over switch (23) are respectively to be brought into the rest position ($s_0$) of the change-over switch when the handset is not in use or replaced or into the operating position of the change-over switch ($s_1$) when the handset is lifted or in use.

5. A signalling arrangement as claimed in claim 1 or 2, characterised in that in the subscriber station (2), there are arranged means with the aid of which items of dial information are transmitted for outgoing connections which are to be set up, in that the modulated light of the first frequency ($\lambda_1'$) are reflected in light pulses which correspond to the conventional electric dial pulses.

6. A signalling arrangement as claimed in claim 2, characterised in that the first light source (15) and the second light source (16) emit coherent light.

7. A signalling arrangement as claimed in claim 2, characterised in that the first light source (15) and the second light source (16) emit incoherent light.

**Revendications**

1. Dispositif de signalisation dans un système téléphonique à composants alimentés par voie optique, dans lequel les fibres optiques (3) servent, en plus à la transmission des signaux de communications, également à la transmission des signaux qui sont nécessaires pour établir et rompre une liaison et à la transmission de l'énergie sous la forme de lumière en vue de l'alimentation en énergie du poste d'abonné (2), dans lequel l'énergie ou l'alimentation du poste d'abonné (2) est transmise sous la forme d'une lumière non modulée, dans lequel la fréquence de la lumière non modulée ($\lambda_1$) transmise diffère de la fréquence fondamentale du signal lumineux ($\lambda_2$) transmise du central (1) au poste d'abonné (2), et dans lequel il est prévu dans le poste d'abonné (2), pour la lumière ($\lambda_1$, $\lambda_2$, $\lambda_2'$) provenant du central (1) un séparateur de fréquences qui transmet la lumière modulée incidente ($\lambda_2'$), par l'intermédiaire d'un commutateur (23) et d'un transducteur optoélectrique (24), à haut-parleur (25), et la lumière non modulée ($\lambda_1$) à un modulateur opto-acoustique, caractérisé par le fait que dans le central (1) sont prévus des moyens à l'aide desquels tous les postes d'abonnés (2) qui sont reliés au central (1) sont interrogés, du point de vue de leur état de fonctionnement, à l'aide de courtes impulsions lumineuses, qu'il est prévu dans le poste d'abonné (2) un premier commutateur optique (22) et un second commutateur optique (23) qui sont susceptibles d'être commandés en synchronisme par l'abonné, que les courtes impulsions lumineuses ($\lambda_1$, $\lambda_2$) sont absorbées, lorsque le poste d'abonné (2) est au repos, par un transducteur optoélectrique (26) et sont au moins partiellement réfléchies par un modulateur acousto-optique lorsque le poste d'abonné (2) est dans son état activé pour un appel de départ, que dans le cas d'une communication entrante, on émet vers le poste d'abonné, pour activer un organe d'appel, une lumière permanente ou une lumière permanente des deux fréquences ($\lambda_1$, $\lambda_2$), pulsée au rythme d'appel, et que les courtes impulsions lumineuses pour l'interrogation de l'état de fonctionnement sont dimensionnées du point de vue de la longueur des impulsions et du point de vue du rapport d'impulsions de manière que d'une part l'organe d'appel ne soit pas activé et que d'autre part n'intervienne pas un retard notable dans l'établissement d'une liaison de départ.

2. Dispositif de signalisation selon la revendication 1, caractérisé par le fait qu'à partir du central (1), et par l'intermédiaire d'un guide d'onde de lumière (3), sont susceptibles d'être envoyées périodiquement, pour l'interrogation d'une demande de liaison, de courtes impulsions lumineuses d'une lumière non modulée d'une première fréquence ($\lambda_1$) provenant d'une première source de lumière (15) et passant par un séparateur de fréquences (21) et par un premier commutateur optique (22), que les courtes impulsions lumineuses parviennent, à l'état de repos, c'est-à-dire combiné raccroché du poste téléphonique (2), par l'intermédiaire de la position de repos ($s_0$) du commutateur, à un premier transducteur optoélectrique (26) situé du côté de l'abonné, où elles sont absorbées, ou parviennent, à l'état de travail, c'est-à-dire combiné décroché, et par l'intermédiaire de la position de travail ($s_1$) du commutateur et par un aiguillage optique (29) situé du côté abonné, à un modulateur acousto-optique (20) par lequel elles sont réfléchies, que ces courtes impulsions lumineuses réfléchies sont susceptibles d'être amenées, par l'intermédiaire du séparateur de fréquence (18) situé du côté du central et par l'intermédiaire de l'aiguillage optique (17) situé du côté du central, à un transducteur optoélectrique (14) situé du côté du central et qui émet, par l'intermédiaire d'une seconde ligne de couplage (12), des impulsions électriques correspondantes pour un dispositif d'évaluation contenu dans le central (1), qu'à l'état d'appel, de la lumière non modulée de la première fréquence ($\lambda_1$) et de la lumière non modulée d'une seconde fréquence ($\lambda_2$) et provenant d'une seconde source de lumière (16), sont transmises en permanence au premier transducteur optoélectrique (26) situé du côté de l'amenée par l'intermédiaire du séparateur de fréquences (18) situé du côté du central, du guide d'onde de lumière (3), du séparateur de fréquences (21) situé du côté de l'abonné, du premier commutateur optique (22) et d'un second commutateur optique (23) et par les positions respectives de repos ($s_0$) de ces commutateurs, qu'au premier transducteur optoélectrique (26) situé du côté de l'abonné est relié un générateur audio-fréquences (27) contenant une source sonore (28), que le générateur d'audio-fréquences (27) et la source sonore (28) sont activés par suite de l'énergie appliquée et qu'au décrochage du combiné le premier commutateur optique (22) et le second commutateur optique (23) sont basculés respectivement dans leurs positions de travail ($s_1$), en sorte que la lumière non modulée de la première fréquence ($\lambda_1$) peut être transformée à l'aide du modulateur acousto-optique (20) en lumière modulée de la première fréquence ($\lambda_1'$) et la lumière modulée d'une seconde fréquence ($\lambda_2'$) peut être transformée, à l'aide d'un second transducteur optoélectrique (24) situé du côté de l'abonné, en des signaux électriques, et qu'un haut-parleur (25) qui est relié au second transducteur optoélectrique (24) situé du côté de l'abonné, produit des signaux acoustiques qui correspondent aux signaux de communications optiques appliqués.

3. Dispositif de signalisation selon la revendication 1 ou 2, caractérisé par le fait que le premier commutateur optique (22) et le second commutateur optique (23) sont réalisés sous la forme de commutateurs monostables à fibres et à commande magnétique et que pour le poste d'abonné (2) il est prévu un combiné qui contient le transducteur acousto-optique (20) faisant office de capsule microphonique et le haut-parleur (25) faisant office de capsule-écouteur, combiné dans la poignée ou dans la partie par laquelle il repose sur l'appareil téléphonique est disposé un aimant permanent à intensité de champ appropriée, la disposition étant telle que le premier commutateur optique (22) et le second commutateur optique (23) sont susceptibles dans leurs positions respectives de repos ($s_0$) lorsque le combiné est accroché ou repose sur l'appareil téléphonique, ou dans leurs positions respectives de travail ($s_1$) lorsque le combiné est soulevé ou est décroché.

4. Dispositif de signalisation selon la revendication 1 ou 2, caractérisé par le fait que le premier commutateur optique (22) et le second commutateur optique (23) sont réalisés sous la forme de commutateurs bistables à fibres et à commande magnétique, que pour la commande du premier commutateur optique (22) et du second commutateur optique (23) de l'énergie électrique sous la forme d'une charge de condensateur est susceptible d'être prélevée du transducteur optoélectrique (26) et que la charge de condensateur, lorsqu'on décroche le combiné ou qu'on le soulève de l'appareil téléphonique ou lorsqu'on l'accroche ou qu'on le place sur l'appareil photographique, s'écoule directement ou indirectement par l'intermédiaire d'un contact de crochets en soi connu, dans la bobine de commande concernée du premier commutateur optique (22) et du second commutateur optique (23) de manière que le premier commutateur optique (22) et le second commutateur optique (23) puissent être amenés dans leurs positions respectives de repos lorsque le combiné est accroché ou repose sur l'appareil téléphonique, ou dans leurs positions respectives de travail (s₁) lorsque le combiné est soulevé ou est décroché.

5. Dispositif de signalisation selon la revendication 1 ou 2, caractérisé par le fait que dans le poste d'abonné (2) sont prévus des moyens à l'aide desquels sont émises des informations de sélection pour une liaison à établir en faisant en sorte que la lumière modulée de premières fréquences ($\lambda_1'$) soit transformée en des impulsions lumineuses qui correspondent aux impulsions électriques de sélection courante.

6. Dispositif de signalisation selon la revendication 2, caractérisé par le fait que la première source de lumière (15) et la seconde source de lumière (16) émettent une lumière cohérente.

7. Dispositif de signalisation selon la revendication 2, caractérisé par le fait que la première source de lumière (15) et la seconde source de lumière (16) émettent une lumière non cohérente.